# EUROPÄISCHE PATENTSCHRIFT

(11) **EP 0 602 066 B1**
(45) Veröffentlichungstag und Bekanntmachung des Hinweises auf die Patenterteilung: **19.06.1996**
(21) Anmeldenummer: 92916996.9
(22) Anmeldetag: 12.08.1992
(51) Int. Cl.: F16K 31/02

(54) **ELEKTRISCH BETÄTIGTES VENTIL FÜR EIN UNTER DRUCK STEHENDES FLUID**
ELECTRICALLY ACTUATED VALVE FOR A PRESSURISED FLUID
VANNE ACTIONNEE ELECTRIQUEMENT POUR FLUIDE SOUS PRESSION

(30) Priorität: 01.09.1991 DE 4128889
(43) Veröffentlichungstag der Anmeldung: 22.06.1994
(73) Patentinhaber: HANSA METALLWERKE AG, D-70567 Stuttgart (DE)
(72) Erfinder: OSTERTAG, Ulrich, D-70597 Stuttgart 70 (DE); OSTERTAG, Reinhard, D-70597 Stuttgart 70 (DE)
(74) Vertreter: Ostertag, Ulrich
(86) Internationale Anmeldenummer: EP9201840
(87) Internationale Veröffentlichungsnummer: WO9305327

(56) Entgegenhaltungen:
- DE-A- 4 003 329
- GB-A- 1 511 658
- US-A- 4 342 334
- US-A- 4 930 463

## Beschreibung

Die Erfindung betrifft ein elektrisch betätigtes Ventil für ein unter Druck stehendes Fluid, insbesondere Sanitärventil, mit
a) einem Gehäuse, welches einen Zulaufkanal und einen Auslaufkanal für das Fluid aufweist;
b) einem im Gehäuse zwischen Zulaufkanal und Auslaufkanal angeordneten Schließelement;
c) einer elektrischen Betätigungseinrichtung, welche in Übereinstimmung mit einer an sie gelegten Steuerspannung das Schließelement in einen Schließzustand oder einen Offenzustand zu bringen vermag.

Bekannte elektrisch betätigte Ventile arbeiten im allgemeinen elektromagnetisch. Das heißt, sie besitzen eine stromdurchflossene Wicklung, welche im einfachsten Falle auf magnetischem Wege direkt das Schließelement bewegt. Die hierbei benötigten elektrischen Ströme sind jedoch so groß, daß diese einfache Bauweise für viele Anwendungsfälle ausscheidet. Im allgemeinen finden pilotgesteuerte elektromagnetische Ventile Verwendung, bei denen mit Hilfe der stromdurchflossenen Magnetspule nur ein Pilotventil betätigt wird, dessen Durchströmungsquerschnitt verhältnismäßig klein ist. Als eigentliches Schließelement findet eine flexible Membran Verwendung, die je nach Öffnungszustand des in ihr liegenden Pilotventiles unter dem Einfluß des Druckes des anstehenden Mediums die Öffnungs- bzw. Schließbewegung ausführt. Auch derartige Ventile haben jedoch noch immer eine verhältnismäßig große Leistungsaufnahme, so daß sie nur bedingt für den Einsatz mit Batterie geeignet sind. Die verhältnismäßig kleinen Strömungsquerschnitte in den Pilotventilen und insbesondere die Pilotöffnungen in den flexiblen Membranen können leicht verstopfen; dies gilt insbesondere dann, wenn als Fluid warmes Wasser verwendet wird, aus dem sich leicht Kalk abscheidet. Die Magnetspule ist außerdem ein kostspieliges und platzraubendes Element. Die Membranen können altern und brüchig werden.

Aufgabe der vorliegenden Erfindung ist es, ein elektrisch betätigtes Ventil der eingangs genannten Art zu schaffen, welches mit preiswerten Komponenten raum- und energiesparend aufgebaut werden kann.

Diese Aufgabe wird gemäß der Ansprüche 1 und 12 gelöst.

Elektroviskose Flüssigkeiten sind als solche bekannt und beispielsweise in der EP-OS 0 191 585, der DE-OS 35 36 934 oder der EP-OS 0 319 201 beschrieben. Es handelt sich dabei um Substanzen, die ihre Viskosität unter dem Einfluß elektrischer Felder zwischen "flüssig" und "starr" stufenlos verändern. Sie finden bisher hauptsächlich Einsatz bei der variablen hydraulischen Dämpfung verschiedener Komponenten im Automobilbau, so bei der Motorlagerung in der DE-PS 33 36 965, oder als Stoßdämpfer wie in der DE-PS 37 09 447.

Bei dem erfindungsgemäßen ersten Ausführungsbeispiel der Erfindung werden elektriviskose Flüssigkeiten in einer durch eine Steuerspannung beeinflußbaren Bremse verwendet, welche den den Fluiddurchsatz bestimmenden Rotor in seiner Beweglichkeit beeinflußt: Ist die Viskosität gering, bewegt sich der Rotor unter dem Einfluß des durchströmenden Fluids praktisch frei, so daß ein maximaler Fluiddurchsatz erzielt wird. Erhöht man die Steuerspannung und damit die Viskosität der elektroviskosen Flüssigkeit, so setzt die Wirkung der Bremse ein. Die Drehung des Rotors und damit der Durchsatz des Fluids durch das Ventil wird verringert. Die Steuerspannung kann auf einen solchen Wert gesteigert werden, bis schließlich die elektroviskose Flüssigkeit der Bremse im wesentlichen starr ist. Dann ist der Rotor in seiner Bewegung vollständig blockiert. Sofern die Abdichtung zwischen Rotor und Gehäuse ideal ist, ist das Ventil dann geschlossen.

Ersichtlich ist der Aufbau eines derartigen Ventiles außerordentlich einfach; teure und platzraubende Spulen werden nicht benötigt. Die Stromaufnahme ist verhältnismäßig klein; während der Schaltvorgänge werden auch keine "Spitzenströme" benötigt. Die geringen erforderlichen Stromstärken zur Aufrechterhaltung des starren Viskositätszustandes der elektroviskosen Flüssigkeiten können ohne weiteres auch durch Solarzellen erbracht werden. In diesem Falle werden zur Zwischenspeicherung elektrischer Energie nur verhältnismäßig kleine Batterien benötigt. Die zum Schließen des Ventiles erforderliche Arbeit wird nicht von der zugeführten elektrischen Energie sondern ausschließlich vom Druck des Fluids selbst geleistet. Die Durchströmungsquerschnitte für das Fluid innerhalb des Ventiles können sehr groß sein, so daß keine unerwünschten Drosseleffekte auftreten und keine engen Querschnitte vorliegen, an denen Verstopfungsgefahr droht.

Die Bremse umfaßt bei einem bevorzugten Ausführungsbeispiel dieser Art ein Bremsrad, welches in einer mit der elektroviskosen Flüssigkeit angefüllten Bremskammer verdrehbar und an den Rotor ankoppelbar ist.

Zweckmäßig ist dabei, wenn das Bremsrad koaxial zum Rotor angeordnet und über eine formschlüssige Steckverbindung an den Rotor gekoppelt ist.

Der Rotor kann in seiner Mantelfläche eine Mehrzahl von vertieften Taschen zum portionsweisen Transport des Fluids aufweisen. Die Abdichtung des Rotors gegenüber dem Gehäuse findet dann an den äußeren Flächen der Trennwände statt, die zwischen den vertieften Taschen stehen bleiben.

Wenn der Rotor kegelstumpfförmig gestaltet ist, gelingt seine Abdichtung gegen das Gehäuse leichter, da dann Toleranzen im Durchmesser durch axiale Verschiebung des Rotors ausgeglichen werden können.

Der Rotor kann nach einem weiteren Merkmal der Erfindung zumindest im Bereich seiner Mantelfläche aus hartem Werkstoff, z.B. Keramikmaterial, bestehen. Derartiges Keramikmaterial wird bereits heute in großem Umfange für Steuerscheiben in Sanitärventilen eingesetzt. Es verbindet gute Dicht- und Gleiteigenschaften mit hoher Verschleißfestigkeit.

Zweckmäßig ist ferner, wenn der Rotor gegenüber dem Gehäuse durch einen in dem Gehäuse unbeweglich angeordneten Einsatz abgedichtet ist, der in dichtender Gleitberührung mit der Mantelfläche des Rotors steht.

Der Einsatz kann dabei wiederum zumindest in dem dem Rotor benachbarten Bereich aus hartem Werkstoff, z.B. Keramikmaterial, bestehen.

Damit auch bei einem evtl. Ausfall der elektrischen Steuerspannung oder während sehr langer Stillstandszeiten das Ventil zuverlässig geschlossen bleibt, kann sich eine von Hand betätigbare Verriegelungseinrichtung empfehlen, mit welcher die Verdrehbarkeit des Rotors unabhängig von der elektroviskosen Bremse unterbunden werden kann.

Diese Verriegelungseinrichtung wiederum kann einen axial verschiebbaren Stift umfassen, welcher formschlüssig in eine entsprechende Öffnung des Rotors einführbar ist. Der axial verschiebbare Stift wiederum sollte in einer Freigabestellung und einer Verriegelungsstellung einrastbar sein.

Die in Anspruch 1 beschriebene und oben angesprochene erste Ausführungsform der Erfindung ist in ihrer Gesamtbauweise besonders einfach, setzt aber u.U. eine gewisse Sorgfalt bei der Abdichtung des Rotors gegenüber dem Gehäuse voraus. Auf diese kann aber überall dort verzichtet werden, wo ein tropf freies Verschließen des Ventiles nicht unerläßlich ist.

Eine zweite Ausführungsform der Erfindung, welche die oben geschilderte Aufgabenstellung ebenfalls löst, bereitet keine Schwierigkeiten beim tropf freien Verschließen. Sie zeichnet sich dadurch aus, daß
d) in dem Weg des Fluids zwischen Zulaufkanal und Auslaufkanal ein Rotor vorgesehen ist, der unter dem Druck des Fluids verdrehbar ist;
e) ein Getriebe vorgesehen ist, welches die Drehbewegung des Rotors in eine Bewegung des Schließelementes zwischen der Offen- und der Schließstellung umsetzt;
f) die Betätigungseinrichtung eine im Kraftweg zwischen Rotor und Schließelement liegende elektroviskose Kupplung ist, die als elektrisch beeinflußbares Medium eine elektroviskose Flüssigkeit enthält, die sich zwischen zwei Elektroden befindet.

Bei diesem Ausführungsbeispiel wird also der Rotor nicht mehr gleichzeitig als Schließelement sondern ausschließlich als Antriebsquelle verwendet, welche mittels eines Getriebes das Schließelement zwischen der Offen- und Schließstellung bewegt. Eine komplette Abdichtung des Rotors gegen das Gehäuse des Ventiles ist dabei nicht erforderlich; es reicht aus, wenn das durchströmende Fluid den Rotor tatsächlich in Bewegung versetzt. Die Menge des Fluiddurchsatzes wird durch die Stellung des gesonderten Schließelementes bestimmt, für welches grundsätzlich jede bekannte Bauart in Frage kommt. Der "Schaltzustand" der elektroviskosen Kupplung, welche im Kraftweg zwischen dem Rotor und dem Schließelement liegt, bestimmt, ob der Rotor "leer" läuft, seine Bewegung also keinen Einfluß auf die Position des Schließelementes besitzt, oder ob die Drehung des Rotors eine Positionsveränderung des Schließelementes zur Folge hat. Die Vorteile dieser zweiten Ausführungsform der Erfindung stimmen im übrigen im wesentlichen mit den oben bereits für das erste Ausführungsbeispiel erwähnten überein.

Das Schließelement sollte durch einen Kraftspeicher, z.B. eine Federeinrichtung, in Öffnungsrichtung beaufschlagt sein. Die Bewegung des Schließelementes auf die Schließstellung zu erfolgt also durch "Einkuppeln" der elektroviskosen Kupplung über die Bewegung des Rotors, während der Kraftspeicher nach "Auskuppeln" der elektroviskosen Kupplung das Schließelement wieder in die Öffnungsstellung zurück bewegt.

Von besonderem Vorteil ist, wenn das Schließelement eine verdrehbare Scheibe und der Kraftspeicher eine Spiralfeder ist.

Im allgemeinen sollte Vorsorge dafür getragen werden, daß eine Verdrehung des Rotors in einem Drehsinne unterbunden wird. Es soll also verhindert werden, daß unter der Einwirkung der Federeinrichtung eine "rückwärts" gerichtete Kraftübertragung möglich ist, welche den Rotor entgegen dem Sinne verdreht, in welchem er von dem unter Druck stehenden Fluid bewegt wird.

Bei der Einrichtung, welche die Verdrehung des Rotors in einem Drehsinne unterbindet, kann es sich um das Getriebe selbst handeln, welches aufgrund seiner Übersetzung verhindert, daß die Federeinrichtung den Rotor in Rückwärtseinrichtung verdreht. Das Getriebe muß ja im allgemeinen die Rotor-Drehbewegung deutlich untersetzen, so daß eine mehrfache Umdrehung des Rotors dem Hub des Schließelementes zwischen der Schließ- und der Offenstellung entspricht Dann ist regelmäßig die Kraft der Federeinrichtung, welche auf die Abtriebswelle des Getriebes wirkt, nicht mehr ausreichend, den Rotor in Bewegung zu setzen.

Alternativ dazu kann die Einrichtung, welche die Verdrehung des Rotors in einem Drehsinne unterbindet, auch eine Überholkupplung sein, wie sie als konstruktives Element an und für sich bekannt ist.

Die elektroviskose Kupplung sollte im Kraftweg zwischen Getriebe und Schließelement angeordnet sein. Die Relativbewegung von Antriebs- und Abtriebsteil dieser Kupplung durchläuft dann nur einen verhältnismäßig kleinen Hub, insbesondere eine verhältnismäßig kleine Winkelverdrehung, was für die Stromzuführungskabel von Nutzen ist.

Die elektroviskose Kupplung kann ein Kupplungsrad umfassen, welches in einer mit der elektroviskosen Flüssigkeit angefüllten Kupplungskammer eines Kupplungsgehäuses verdrehbar ist.

Die Kupplungskammer sollte im Querschnitt ein von der Kreisform abweichendes Profil aufweisen. Hierdurch wird insbesondere bei starrer elektroviskoser Flüssigkeit der Kraftschluß zu einem Formschluß.

Auch bei dem zweiten Ausführungsbeispiel der Erfindung sollte aus den oben erwähnten Gründen eine von Hand betätigbare Verriegelungseinrichtung vorgesehen sein, mit welcher die Bewegung des Schließelementes blockierbar ist.

Ausführungsbeispiele der Erfindung werden nachfolgend anhand der Zeichnung näher erläutert; es zeigen
- Figur 1:: einen Schnitt durch ein erstes Ausführungsbeispiel eines Ventiles für ein unter Druck stehendes Fluid gemäß Linie I-I von Figur 2 (Rotor nicht geschnitten);
- Figur 2:: einen Schnitt durch das Ventil von Figur 1 gemäß Linie II-II;
- Figur 3:: einen Schnitt durch ein zweites Ausführungsbeispiel eines Ventiles gemäß Linie III-III von Figur 4 (Rotor, Getriebe und Bremsrad nicht geschnitten);
- Figur 4:: einen Schnitt durch das Ventil von Figur 3 gemäß Linie IV-IV;
- Figur 5:: einen Schnitt durch die elektroviskose Kupplung des in Figur 3 dargestellten Ventils gemäß Linie V-V.

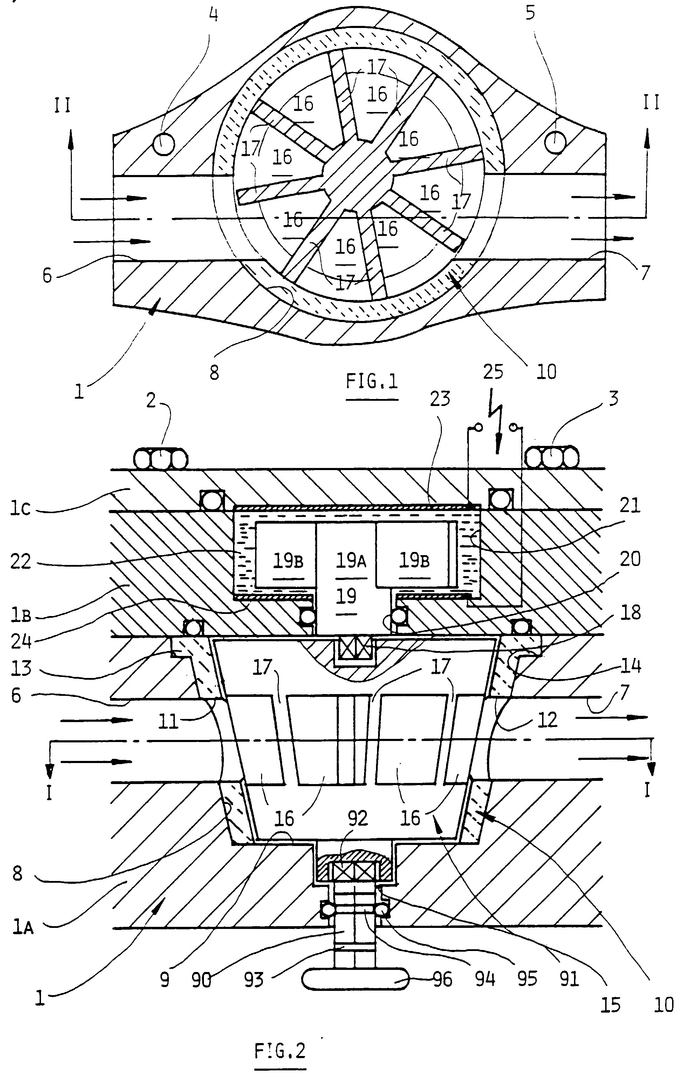

Das in den Figuren 1 und 2 dargestellte Ventil eignet sich zur kontinuierlichen Regelung des Durchsatzes eines unter Druck stehenden Fluids, insbesondere von Wasser, zwischen der vollständigen Schließstellung und einem maximalen Durchsatz. Es weist ein Gehäuse 1 auf, welches in drei Gehäuseteile 1a, 1b, 1c aufgeteilt ist. Diese werden durch Schrauben 2, 3 zusammengehalten, die Bohrungen 4, 5 in allen Gehäuseteilen 1a, 1b, 1c durchsetzen.

Das Gehäuse 1 weist im Gehäuseteil la einen Zulaufkanal 6 für das unter Druck stehende Fluid und, koaxial hierzu, einen Auslaufkanal 7 auf. Zwischen Zulaufkanal 6 und Auslaufkanal 7 ist im Gehäuse 1 eine gegenüber der Achse der beiden Kanäle 6, 7 versetzte, also exzentrische Rotorkammer 8 ausgebildet, welche die Gestalt eines Kegelstumpfes hat. Das heißt, sie ist im Querschnitt kreisförmig, verjüngt sich aber von der oberen Stirnseite des Gehäuseteiles la bis zu einem Boden 9. Die Mantelfläche der Rotorkammer 8 wird von einem Einsatz 10 aus keramischem Material ausgekleidet, dessen innere Mantelfläche wiederum auf hohe Güte poliert ist, so daß sie sich als Dichtfläche eignet.

Der Einsatz 10 weist Durchgangsöffnungen 11, 12 auf, die zu den Kanälen 6 und 7 koaxial sind und gleichen Durchmesser wie diese aufweisen.

Am in Figur 2 oberen Ende ist der Einsatz 10 mit einem radial überstehenden Ringflansch 13 versehen, der auf einer Stufe 14 im Gehäuseteil 1a aufliegt.

Innerhalb der Rotorkammer 8 ist ein komplementär gestalteter, also ebenfalls kegelstumpfförmiger Rotor 15 drehbar gelagert. Der Rotor 15 besteht ganz oder zumindest im äußeren Bereich ebenfalls aus Keramik und ist an der Mantelfläche, die mit der inneren Mantelfläche des Einsatzes 8 in Berührung steht, auf Dichtqualität poliert. Durch die Konizität der aneinander anliegenden Mantelflächen von Einsatz 10 und Rotor 15 lassen sich beide Teile leicht gegeneinander abdichten.

In den Rotor 15 ist eine Vielzahl von Kammern 16 eingearbeitet, die durch schmale, im wesentlichen radial verlaufende Trennwände 17 voneinander getrennt sind.

Der Rotor 15 ist an seiner oberen Stirnfläche durch einen Formschluß 18 an ein koaxiales Bremsrad 19 angekoppelt. Das Bremsrad 19 umfaßt eine Nabe 19a, welche abgedichtet eine koaxiale Bohrung 20 des Gehäuseteiles 1b durchsetzt. Die Bohrung 20 mündet in eine Bremskammer 21, die sich zur oberen Stirnseite des Gehäuseteiles 1b öffnet und mit einer elektroviskosen Flüssigkeit 22 angefüllt ist.

An die Nabe 19a des Bremsrades 19 sind Flügel 19b angeformt, welche sich bei der Drehung des Bremsrades 19 in der elektroviskosen Flüssigkeit 22 bewegen.

Die Bremskammer 21 ist nach oben durch das dritte Gehäuseteil 1c abgedeckt.

Die obere Stirnfläche der Bremskammer 21, die sich am Gehäuseteil 1c befindet, sowie die untere, ringförmige Stirnfläche im Gehäuseteil 1b sind durch metallische Elektroden 23, 24 abgedeckt, die an eine Hochspannungsquelle 25 angeschlossen sind. Die Spannung der Hochspannungsquelle 25, bei der es sich sowohl um eine Gleichspannungs- als auch um eine Wechselspannungsquelle handeln kann, läßt sich kontinuierlich zwischen einem unteren Wert, insbesondere dem Wert Null, bei welchem die elektroviskose Flüssigkeit 22 flüssig ist, und einem Maximalwert, bei welchem die elektroviskose Flüssigkeit 22 starr ist, verändern.

Das oben beschriebene Ventil arbeitet wie folgt:

Solange sich die Spannung der Hochspannungsquelle 25 auf dem unteren Wert befindet und die elektroviskose Flüssigkeit 22 in der Bremskammer 21 flüssig ist, ist die Drehung des Rotors 15 innerhalb der Rotorkammer 8 unbehindert. Das unter Druck stehende Fluid kann daher den Zulaufkanal 6, die Rotorkammer 8 und den Auslaufkanal 7 im wesentlichen unbehindert durchströmen, wobei es den Rotor 15 in Drehung versetzt. Der Transport des Fluids zwischen dem Zulaufkanal 6 und dem Auslaufkanal 7 erfolgt "portionsweise" in den verschiedenen Taschen 16 des Rotors 15. Um die Reibungskräfte zu verringern, welche die Drehung des Rotors 15 behindern könnten, sind alle Flächen, über welche der Rotor 15 mit stationären Teilen, insbesondere mit dem Einsatz 10, in Verbindung stehen, so klein wie möglich zu halten und ggf. zu schmieren.

Wird eine Drosselung des Wasserstromes gewünscht, so wird die Spannung der Hochspannungsquelle 25 hochgefahren. Damit beginnt sich die Viskosität der elektroviskosen Flüssigkeit 22 in der Bremskammer 21 zu erhöhen, wodurch die Bewegung der Flügel 19b des Bremsrades 19 behindert wird. Es entsteht eine Bremswirkung, die von der Viskosität der elektroviskosen Flüssigkeit 22 abhängt. Die Menge des Fluiddurchsatzes durch das Ventil wird nunmehr durch die Bremswirkung des Bremsrades 19 sowie durch den Druck des Fluids bestimmt.

Soll der Fluiddurchsatz durch das Ventil vollständig unterbunden werden, wird die Spannung der Hochspannungsquelle 25 so weit gesteigert, bis die elektroviskose Flüssigkeit in der Bremskammer 22 vollständig erstarrt ist. Die Bewegung der Flügel 19b des Bremsrades 19 in der Bremskammer 21 und damit die Bewegung des Rotors 15 in der Rotorkammer 8 kommt vollständig zum Stillstand. Aufgrund der Trennwände 17 des Rotors 15 zwischen den einzelnen Kammern 16, von denen immer einige an dem Einsatz 10 anliegen, ist nunmehr ein Durchgang von Fluid zwischen dem Zulaufkanal 6 und dem Auslaufkanal 7 unterbunden: das Ventil ist geschlossen.

Im unteren Bereich der Figur 2 ist eine Vorrichtung dargestellt, mit welcher sich bei Ausfall der Hochspannungsquelle oder allgemein für längere Zeit das Ventil schließen läßt. Sie umfaßt einen handbetätigten Mehrkantstift 90, welcher eine Durchbrechung 91 komplementären Querschnitts im Gehäuse 1 durchsetzt. Das Ende des Stiftes 90 kann in eine entsprechende Mehrkantöffnung 92 an der Unterseite des Rotors 15 eingeführt werden, wodurch eine Drehung des Rotors 15 unmöglich wird. Der Stift 90 läßt sich in dieser Verriegelungsstellung und in der in der Zeichnung dargestellten Freigabestellung durch zwei Umfangsnuten 93, 94 einrasten, die mit einem O-Ring 95 zusammenwirken. Am äußeren Ende trägt der Stift 90 ein Handbetätigungsorgan 96.

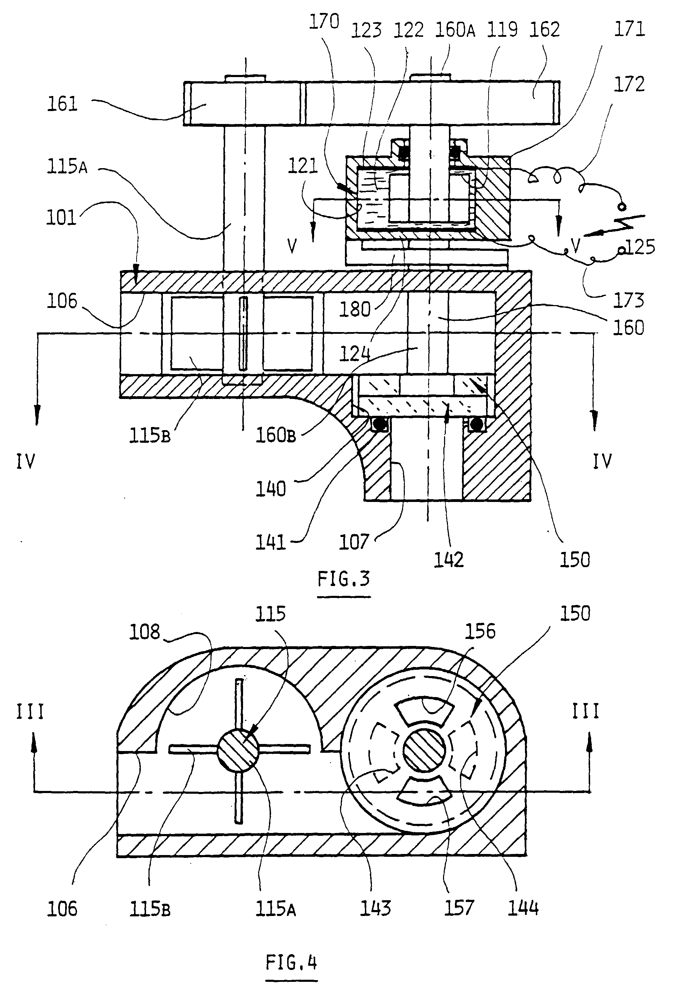

In den Figuren 3 bis 5 ist ein zweites Ausführungsbeispiel eines Ventiles für ein unter Druck stehendes Fluid dargestellt. Auch dieses umfaßt ein Gehäuse 101 mit einem Zulaufkanal 106 und einem im rechten Winkel hierzu abgehenden Auslaufkanal 107. Der Zulaufkanal 106 mündet, ähnlich wie beim Ausführungsbeispiel nach den Figuren 1 und 2 in eine Rotorkammer 108, die aber zylindrisch ist, also in der axialen Erstreckung einen konstanten Querschnitt aufweist. Die Rotorkammer 108 liegt wiederum versetzt zur Achse des Zulaufkanales 106; beim dargestellten Ausführungsbeispiel stellt sie sich im horizontalen Schnitt gemäß Figur 4 als halbkreisförmige Erweiterung dar.

In der Rotorkammer 108 ist ein Rotor 115 drehbar gelagert, der in diesem Falle eine Nabe 115a und mehrere radial verlaufende Flügel 115b umfaßt. Die Rotorflügel 115b brauchen an der Innenwandung der Rotorkammer 108 nicht notwendig dichtend anzuliegen; es darf zwischen diesen Teilen auch ein Spalt verbleiben, der nur so klein gehalten werden muß, daß der Rotor 115 von dem in den Zulaufkanal 106 einströmenden Fluid in Drehung versetzt werden kann.

Von der Rotorkammer 108 führt eine koaxiale Fortsetzung des Zulaufkanals 106 zu einer im horizontalen Schnitt von Figur 4 in der Draufsicht kreisförmigen Vertiefung 140, welche den Auslaufkanal 107 umgibt. In die Vertiefung 140 ist unter Zwischenfügung eines O-Ringes 141 eine erste Steuerscheibe 142 so eingesetzt, daß sie sich gegenüber dem Gehäuse 101 nicht verdrehen kann. Die erste Steuerscheibe 142 weist zwei Durchgangsöffnungen 143, 144 (in Figur 4 gestrichelt gezeichnet) auf, welche von der oberen kreisförmigen Stirnfläche der ersten Steuerscheibe zu der unteren kreisförmigen Stirnfläche verlaufen. Die erste Steuerscheibe 142 ist an ihrer nach oben zeigenden Stirnfläche auf hohe Güte poliert, so daß sie dort als Dichtung wirken kann.

Auf der ersten Steuerscheibe 142 liegt eine zweite, ebenfalls kreisförmige Steuerscheibe 150, die mittels einer zweigeteilten Antriebswelle 160 in noch zu beschreibender Weise gegenüber der ersten, feststehenden Steuerscheibe verdreht werden kann. Die zweite Steuerscheibe 150 weist ebenfalls zwei Durchtrittsöffnungen 156, 157 auf, die durch Verdrehen der zweiten Steuerscheibe 150 mehr oder weniger in Überlappung mit den Durchtrittsöffnungen 143 und 144 der ersten Steuerscheibe gebracht werden können.

Die zweite Steuerscheibe 150 wird gegenüber der ersten Steuerscheibe 142 mit Hilfe des Rotors 115 auf folgende Weise verdreht:

Wie Figur 3 zu entnehmen ist, ist die Nabe 115a des Rotors aus dem Gehäuse 101 (selbstverständlich abgedichtet) herausgeführt. Sie trägt an ihrem äußeren Ende ein erstes Zahnrad 161 verhältnismäßig kleinen Durchmessers. Dieses kämmt mit einem zweiten Zahnrad 162 größeren Durchmessers, welches auf dem äußeren Teil 160a der zweigeteilten Antriebswelle 160 der zweiten Steuerscheibe 150 sitzt. Der äußere Teil 160a ist mit dem inneren Teil 160b der Antriebswelle 160 über eine elektroviskose Kupplung verbunden, welche insgesamt das Bezugszeichen 170 trägt. Die elektroviskose Kupplung 170 umfaßt ein Gehäuse 171, in welchem eine mit einer elektroviskosen Flüssigkeit 122 angefüllte Kupplungskammer 121 ausgebildet ist. Das Gehäuse 171 ist koaxial und starr mit dem inneren Teil 160b der Antriebswelle 160 der zweiten Steuerscheibe 150 verbunden, so daß sich diese Teile immer gemeinsam verdrehen.

Der äußere Teil 160a der Antriebswelle 160 durchsetzt abgedichtet eine Bohrung in der oberen Stirnfläche (in der Sicht der Figur 3) des Gehäuses 171; er trägt an seinem innerhalb der Kupplungskammer 121 befindlichen Bereich ein Kupplungsrad 119 mit nach außen ragenden Flügeln, welche sich in der elektroviskosen Flüssigkeit 122 mehr oder weniger frei bewegen können.

An der oberen und unteren Stirnfläche der Kupplungskammer 121 sind wiederum metallische Elektroden 123 und 124 angebracht, welche über flexible Kabel 172, 173 mit einer Hochspannungsquelle 125 verbunden sind.

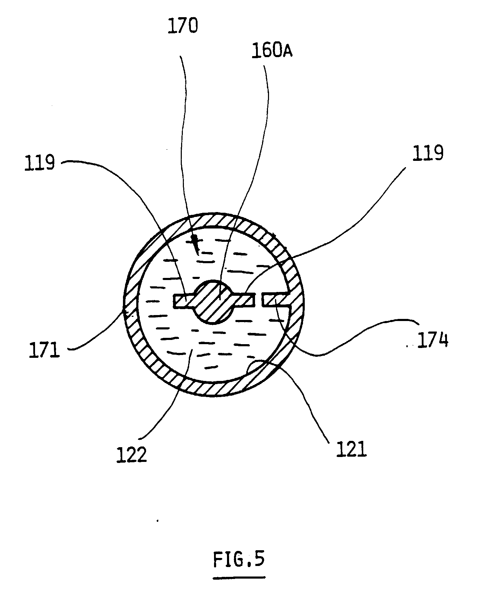

Wie der Figur 5 zu entnehmen ist, ragt von der Innenseite des Gehäuses 171 der Kupplung 170 eine Rippe 174 radial nach innen in die Kupplungskammer 121. Sie verbessert die Kraftübertragung zwischen antreibendem und angetriebenem Kupplungsteil.

Die Unterseite des Gehäuses 171 der elektroviskosen Kupplung 170 ist über eine Spiralfeder 180 mit einer Außenfläche des Gehäuses 101 des Ventiles derart verbunden, daß das Gehäuse 171 der Kupplung 170 sowie der innere Teil 160b der Antriebswelle 160 und damit die zweite Steuerscheibe 150 in Richtung auf die Offenstellung beaufschlagt sind. Die zweite Steuerscheibe 150 befindet sich daher normalerweise oder im drucklosen Zustand ohne Zufuhr von Fluid in der Offenstellung (in Figur 4 ist dagegen die Schließstellung dargestellt).

Das beschriebene Ventil arbeitet wie folgt:

Zunächst sei der Übergang zwischen der vollständigen Offen- und der vollständigen Schließstellung beschrieben. Im Offenzustand nimmt die Spannung der Hochspannungsquelle 125 den niedrigsten Betriebswert an, insbesondere dem Wert Null, bei welchem die elektroviskose Flüssigkeit 122 in der Kupplungskammer 121 flüssig ist. Durch das den Einlaufkanal 106 durchströmende Medium wird zwar der Rotor 115 in Drehung versetzt; diese Drehung wird auch über die Nabe 115a des Rotors, die Zahnräder 161 und 162 auf den äußeren Teil 160a der Antriebswelle 160 übertragen. Der äußere Teil 160a bleibt jedoch vom inneren Teil 160b der Antriebswelle 160 abgekoppelt, weil sich die an den äußeren Teil 160a der Antriebswelle 160 angeformten Flügel 119 im wesentlichen frei in der elektroviskosen Flüssigkeit 122 bewegen können und daher von diesen Flügeln 119 auf das Gehäuse 171 keine nennenswerte Drehmomentenübertragung stattfindet. Das Fluid kann daher durch den Kanal 106 und die aufeinander ausgerichteten Durchgangsöffnungen 156, 157, 146, 147 der beiden Steuerscheiben 142, 150 zum Auslaufkanal 107 fließen.

Zum Schließen des Ventiles wird die Hochspannungsquelle 125 auf den höchsten Betriebswert gefahren, bei welchem die elektroviskose Flüssigkeit 122 in der Kupplungskammer 121 starr wird. Nunmehr entsteht ein Kraftschluß zwischen dem äußeren Teil 160a und dem inneren Teil 160b der Antriebswelle 160. Die Drehung des Rotors 115 überträgt sich somit auf die zweite Steuerscheibe 150 und verdreht diese solange, bis schließlich die durch einen Anschlag definierte Schließstellung erreicht ist, gegen die Federwirkung der Spiralfeder 180. Die Schließbewegung der beweglichen Steuerscheibe 150 wird dabei auf das Ende des Hubes zu langsamer, da der Durchsatz des Fluids durch das Ventil zunehmend kleiner und die Drehung des Rotors 115 zunehmend langsamer wird. Dies ist ein erwünschter Effekt, da hierdurch Druckstöße, die bei herkömmlichen Magnetventilen mit dem Schließen verbunden sind, zuverlässig vermieden werden können. Bei dem beschriebenen Ventil stellt sich also der Strom des Fluids gewissermaßen selbst ab.

Bei der Auslegung des durch die Zahnräder 161 und 162 gebildeten Getriebes ist auf eine Selbsthemmung zu achten, die verhindert, daß die Spiralfeder 180 bei erstarrter elektroviskoser Flüssigkeit 122 rückwärts den Rotor 115 in umgekehrter Richtung drehen und damit die zweite Steurscheibe wieder in Öffnungsrichtung bewegen kann.

Alternativ hierzu kann die unerwünschte Rückwärtsbewegung des Rotors 115 durch eine Überholkupplung irgend einer bekannten Bauart verhindert werden.

Soll das Ventil wieder geöffnet werden, wird die von der Hochspannungsquelle 125 abgegebene Spannung wieder auf den ersten, niedrigsten Betriebswert zurückgefahren. Damit wird der Kraftschluß zwischen dem äußeren Teil 160a und dem inneren Teil 160b der Antriebswelle 160 aufgehoben. Unter der Wirkung der Spiralfeder 180 kann sich die bewegliche Steuerscheibe 150 wieder in den Öffnungszustand zurückdrehen; der Durchgang zwischen dem Einlaufkanal 106 und dem Auslaufkanal 107 für das Fluid ist wieder frei.

Mit dem beschriebenen Ventil können durch Wahl von Zwischenwerten der von der Hochspannungsquelle 125 erzeugten Spannung auch Öffnungszustände erzielt werden, die zwischen der vollständigen Schließ- und der vollständigen Offenstellung liegen.

Wird nämlich an die Elektroden 123 und 124 eine Spannung gelegt, bei welcher nur die Viskosität der elektroviskosen Flüssigkeit 122 erhöht wird, diese jedoch noch nicht starr ist, so wird von den sich in der elektroviskosen Flüssigkeit 122 drehenden Flügeln 119 durch Scherkräfte ein bestimmtes, von der Viskosität abhängiges Drehmoment auf das Gehäuse 171 der elektroviskosen Kupplung 170 übertragen. Durch dieses Drehmoment wird das Gehäuse 171 der Kupplung 170 und damit die zweite Steuerscheibe 150 soweit verdreht, bis die Spiralfeder 180 in einem Ausmaße gespannt ist, bei welcher ihr Drehmoment dem durch die Scherkräfte hervorgerufenen entgegengesetzt gleich ist. Durch kontinuierliches Steigern der von der Hochspannungsquelle 125 abgegebenen Spannung läßt sich also im Wechselspiel zwischen viskositätsabhängigen Scherkräften und der vom Drehwinkel abhängigen Wirkung der Spiralfeder 180 jede beliebige Zwischenstellung zwischen der vollständigen Offen- und der vollständigen Schließstellung einstellen.

Selbstverständlich läßt sich auch beim Ausführungsbeispiel nach den Figuren 3 bis 5 eine Sicherungseinrichtung vorsehen, welche eine Rückstellung der beweglichen Steuerscheibe 150 in die Offenstellung beim Ausfall oder Ausschalten der Hochspannungsquelle 125 verhindert.

Die zur Aufrechterhaltung des starren Zustandes der elektroviskosen Flüssigkeit erforderlichen Ströme sind, wie schon erwähnt, außerordentlich klein. Die Hochspannungsquelle kann also so hochohmig ausgelegt werden, daß Gefährdungen von Personen, auch bei Verwendung im sanitären Bereich, mit Sicherheit ausgeschlossen werden können.

Bei den beschriebenen Ausführungsformen von elektrisch betätigten Ventilen wird die zur Schließung benötigte Energie vollständig vom Druck des strömenden Fluids aufgebracht; elektrische Energie wird ausschließlich in dem geringen Umfang benötigt, die zur Aufrechterhaltung des viskosen Zustandes der elektroviskosen Flüssigkeit benötigt wird. Da moderne elektroviskose Flüssigkeiten eine sehr geringe Leitfähigkeit besitzen und die Volumina, die zum Einsatz kommen, sehr klein gehalten werden können, ist auch die elektrische Leistungsaufnahme dieser Ventile außerordentlich niedrig. Sie eignen sich daher insbesondere auch zur Verwendung mit ggf. solarunterstützten Batterien. Alle Strömungswege können gleichwohl sehr großflächig gehalten werden, da Pilotöffnungen nicht benötigt werden.

## Patentansprüche

1. Elektrisch betätigtes Ventil für ein unter Druck stehendes Fluid, insbesondere Sanitärventil, mit
a) einem Gehäuse (1), welches einen Zulaufkanal (6) und einen Auslaufkanal (7) für das Fluid aufweist;
b) einem im Gehäuse zwischen Zulaufkanal und Auslaufkanal angeordneten Schließelement (15);
c) einer elektrischen Betätigungseinrichtung, welche in Übereinstimmung mit einer an sie gelegten Steuerspannung das Schließelement in einen Schließzustand oder einen Offenzustand zu bringen vermag,
dadurch gekennzeichnet, daß
d) das Schließelement ein in dem Weg des Fluids zwischen Zulaufkanal (6) und Auslauf kanal (7) liegender gegenüber dem Gehäuse (1) abgedichteter Rotor (15) ist, der unter dem Druck des Fluids verdrehbar ist und dabei portionsweise Fluid vom Zulaufkanal (6) zum Auslaufkanal (7) transportiert;
e) die elektrische Betätigungseinrichtung als Bremse (19, 21, 22) ausgestaltet ist, die an den Rotor (15) angekoppelt ist und dessen Verdrehbarkeit beeinflußt, wobei die Bremse (19, 21, 22) als elektrisch beeinflußbares Medium eine elektroviskose Flüssigkeit (22) enthält, die sich zwischen zwei Elektroden (23, 24) befindet.

2. Elektrisch betätigtes Ventil nach Anspruch 1, dadurch gekennzeichnet, daß die Bremse (19, 21, 22) ein Bremsrad (19) umfaßt, welches in einer mit der elektroviskosen Flüssigkeit (22) angefüllten Bremskammer (21) verdrehbar und an den Rotor (15) ankoppelbar ist.

3. Elektrisch betätigtes Ventil nach Anspruch 2, dadurch gekennzeichnet, daß das Bremsrad (19) koaxial zum Rotor (15) angeordnet und über eine formschlüssige Steckverbindung (18) an den Rotor (15) gekoppelt ist.

4. Elektrisch betätigtes Ventil nach einem der Ansprüche 1 bis 3, dadurch gekennzeichnet, daß der Rotor (15) in seiner Mantelfläche eine Mehrzahl von vertieften Taschen (16) zum portionsweisen Transport des Fluids aufweist.

5. Elektrisch betätigtes Ventil nach einem der vorhergehenden Ansprüche, dadurch gekennzeichnet, daß der Rotor (15) kegelstumpfförmig ist.

6. Elektrisch betätigtes Ventil nach einem der vorhergehenden Ansprüche, dadurch gekennzeichnet, daß der Rotor (15) zumindest im Bereich seiner Mantelfläche aus Keramikmaterial besteht.

7. Elektrisch betätigtes Ventil nach einem der vorhergehenden Ansprüche, dadurch gekennzeichnet, daß der Rotor (15) gegenüber dem Gehäuse (1) durch einen in dem Gehäuse (1) unbeweglich angeordneten Einsatz (10) abgedichtet ist, der in dichtender Gleitberührung mit der Mantelfläche des Rotors (15) steht.

8. Elektrisch betätigtes Ventil nach Anspruch 7, dadurch gekennzeichnet, daß der Einsatz (10) zumindest in dem dem Rotor (15) benachbarten Bereich aus Keramikmaterial besteht.

9. Elektrisch betätigtes Ventil nach einem der vorhergehenden Ansprüche, gekennzeichnet durch eine von Hand betätigbare Verriegelungseinrichtung (90, 92), mit welcher die Verdrehung des Rotors (15) unabhängig von der elektrischen Bremse (19, 21, 22) unterbunden werden kann.

10. Elektrisch betätigtes Ventil nach Anspruch 9, dadurch gekennzeichnet, daß die Verriegelungseinrichtung einen axial verschiebbaren Stift (90) umfaßt, welcher formschlüssig in eine entsprechende Öffnung (92) des Rotors (15) einführbar ist.

11. Elektrisch betätigtes Ventil nach Anspruch 10, dadurch gekennzeichnet, daß der axial verschiebbare Stift (90) in einer Freigabestellung und in einer Verriegelungsstellung einrastbar ist.

12. Elektrisch betätigtes Ventil für ein unter Druck stehendes Fluid, insbesondere Sanitärventil, mit
a) einem Gehäuse (1), welches einen Zulaufkanal (6) und einen Auslaufkanal (7) für das Fluid aufweist;
b) einem im Gehäuse zwischen Zulaufkanal und Auslaufkanal angeordneten Schließelement (15);
c) einer elektrischen Betätigungseinrichtung, welche in Übereinstimmung mit einer an sie angelegten Steuerspannung das Schließelement in einen Schließzustand oder einen Offenzustand zu bringen vermag,
dadurch gekennzeichnet, daß
d) in dem Weg des Fluids zwischen Zulaufkanal (106) und Auslaufkanal (107) ein Rotor (115) vorgesehen ist, der unter dem Druck des Fluids verdrehbar ist;
e) ein Getriebe (161, 162) vorgesehen ist, welches die Drehbewegung des Rotors (115) in eine Bewegung des Schließelementes (150) zwischen der Offen- und der Schließstellung umsetzt;
f) die Betätigungseinrichtung eine im Kraftweg zwischen Rotor (115) und Schließelement (150) liegende elektroviskose Kupplung (170) ist, die als elektrisch beeinflußbares Medium eine elektroviskose Flüssigkeit (122) enthält, die sich zwischen zwei Elektroden (123, 124) befindet.

13. Elektrisch betätigtes Ventil nach Anspruch 12, dadurch gekennzeichnet, daß das Schließelement (150) durch eine Federeinrichtung (180) in Öffnungsrichtung beaufschlagt ist.

14. Elektrisch betätigtes Ventil nach Anspruch 13, dadurch gekennzeichnet, daß das Schließelement (150) eine verdrehbare Scheibe und die Federeinrichtung (180) eine Spiralfeder ist.

15. Elektrisch betätigtes Ventil nach einem der Ansprüche 12 bis 14, dadurch gekennzeichnet, daß eine Einrichtung vorgesehen ist, welche eine Verdrehung des Rotors (115) in einem Drehsinne unterbindet.

16. Elektrisch betätigtes Ventil nach einem der Ansprüche 13 bis 15, dadurch gekennzeichnet, daß die Einrichtung, welche die Verdrehung des Rotors (115) in einem Drehsinne unterbindet, das Getriebe (161, 162) ist, welches aufgrund seiner Übersetzung verhindert, daß die Federeinrichtung (180) den Rotor (115) in Rückwärtsrichtung verdreht.

17. Elektrisch betätigtes Ventil nach einem der Ansprüche 13 bis 15, dadurch gekennzeichnet, daß die Einrichtung, welche die Verdrehung des Rotors (115) in einem Drehsinne unterbindet, eine Überholkupplung ist.

18. Elektrisch betätigtes Ventil nach einem der Ansprüche 12 bis 17, dadurch gekennzeichnet, daß die elektroviskose Kupplung (170) im Kraftweg zwischen Getriebe (161, 162) und Schließelement (150) angeordnet ist.

19. Elektrisch betätigtes Ventil nach einem der Ansprüche 12 bis 18, dadurch gekennzeichnet, daß die elektroviskose Kupplung (170) ein Kupplungsrad (119) umfaßt, welches in einer mit der elektroviskosen Flüssigkeit (122) angefüllten Kupplungskammer (121) eines Kupplungsgehäuses (171) verdrehbar ist.

20. Elektrisch betätigtes Ventil nach Anspruch 19, dadurch gekennzeichnet, daß die Kupplungskammer (121) im Querschnitt ein von der Kreisform abweichendes Profil (174) aufweist.

21. Elektrisch betätigtes Ventil nach einem der Ansprüche 12 bis 20, dadurch gekennzeichnet, daß eine von Hand betätigbare Verriegelungseinrichtung vorgesehen ist, mit welcher die Bewegung des Schließelementes (150) blockierbar ist.

## Claims

1. Electrically-actuated valve for a pressurised fluid, in particular a sanitary valve, comprising
a) a housing (1) which has an inlet conduit (6) and an outlet conduit (7) for the fluid;
b) a closing device (15) mounted in the housing between inlet conduit and outlet conduit;
c) an electrical actuation mechanism which is capable of moving the closing device into a closed position or an open position depending upon the control voltage applied thereto.
characterised in that
d) the closing device is an armature (15) sealed against the housing (1) and situated in the path of the fluid between inlet conduit (6) and outlet conduit (7), which rotates due to the pressure of the fluid and thereby conveys the fluid little by little from the inlet conduit (6) to the outlet conduit (7);
e) the electrical actuation mechanism is designed as a brake (19, 21, 22) which is coupled to the armature (15) and controls its rotating capability, whereby the brake (19, 21, 22) contains an electroviscous fluid (22) between two electrodes (23, 24) as its electrically controllable medium.

2. Electrically-actuated valve according to Claim 1, characterised in that the brake (19, 21, 22) comprises a brake wheel (19) which rotates in a brake chamber (21) filled with the electroviscous fluid (22) and which can be coupled to the armature (15).

3. Electrically-actuated valve according to Claim 2, characterised in that the brake wheel (19) is mounted coaxial to the armature (15) and is coupled to the armature (15) via a positive locking plug-type connection (18).

4. Electrically-actuated valve according to any one of the Claims 1 to 3, characterised in that the shell of the armature (15) has a number of recessed pockets (16) to convey the fluid little by little.

5. Electrically-actuated valve according to any one of the foregoing Claims, characterised in that the armature (15) has the form of a truncated cone.

6. Electrically-actuated valve according to any one of the foregoing Claims, characterised in that at least the shell of the armature (15) is made of a ceramic material.

7. Electrically-actuated valve according to any one of the foregoing Claims, characterised in that the armature (15) is sealed against the housing (1) by means of an insert (10) rigidly mounted in the housing (1) which is in tight sliding contact with the shell of the armature (15).

8. Electrically-actuated valve according to Claim 7, characterised in that at least the area of the insert (1) adjacent to the armature (15) is made of a ceramic material.

9. Electrically-actuated valve according to any one of the foregoing Claims, characterised by a manually-actuated locking mechanism (90, 92), with which the rotation of the armature (15) can be prevented independently of the electric brake (19, 21, 22).

10. Electrically-actuated valve according to Claim 9, characterised in that the locking mechanism comprises an axially adjustable pin (90) which can be inserted form-fit into a corresponding opening (92) in the armature (15).

11. Electrically-actuated valve according to Claim 10, characterised in that the axially adjustable pin (90) can be engaged in a released position and in a locking position.

12. Electrically-actuated valve for a pressurised fluid, in particular a sanitary valve, comprising
a) a housing (1) which has an inlet conduit (6) and an outlet conduit (7) for the fluid;
b) a closing device (15) mounted in the housing between inlet conduit and outlet conduit;
c) an electrical actuation mechanism which permits the closing device to move into a closed position or an open position depending upon the control voltage applied thereto.
characterised in that
d) an armature (15) is fitted in the path of the fluid between inlet conduit (106) and outlet conduit (107), and which rotates due to the pressure of the fluid;
e) a gear (161, 162) is provided which converts the rotary motion of the armature (115) into a movement of the closing device (150) between the open and closed positions;
f) the actuation mechanism is an electroviscous clutch (170) situated in the force path between armature (115) and closing device (150), which contains an electroviscous fluid (122) between two electrodes (123, 124) as its electrically controllable medium.

13. Electrically-actuated valve according to Claim 12, characterised in that load is applied to the closing device (150) in the opening direction by means of a spring mechanism (180).

14. Electrically-actuated valve according to Claim 13, characterised in that the closing device (15) is a rotating disc and the spring mechanism (180) a helical spring.

15. Electrically-actuated valve according to any one of the Claims 12 to 14, characterised in that a mechanism is fitted which prevents the armature (115) from rotating in one direction of rotation.

16. Electrically-actuated valve according to any one of the Claims 13 to 15, characterised in that the mechanism which prevents the rotation of the armature (115) in one direction of rotation is a gear (161, 162) which, by virtue of its ratio, prevents the spring mechanism (180) turning the armature (115) in the backwards direction.

17. Electrically-actuated valve according to any one of the Claims 13 to 15, characterised in that the mechanism which prevents the rotation of the armature (115) in one direction of rotation is an overriding clutch.

18. Electrically-actuated valve according to any one of the Claims 12 to 17, characterised in that the electroviscous clutch (170) is mounted in the force path between the gear (161, 162) and the closing device (150).

19. Electrically-actuated valve according to the Claims 12 to 18, characterised in that the electroviscous clutch (170) comprises a clutch wheel (119) which rotates in a clutch chamber (121) of a clutch housing (171) filled with the electroviscous fluid (122).

20. Electrically-actuated valve according to Claim 19, characterised in that in cross-sectional area the clutch chamber (121) has a profile (174) which deviates from the circular.

21. Electrically-actuated valve according to any one of Claims 12 to 20, characterised in that a manually-actuated locking mechanism is fitted with which the movement of the closing device (150) can be blocked.

## Revendications

1. Vanne actionnée électriquement pour un fluide sous pression, notamment vanne pour installations sanitaires, avec
a) un carter (1), qui présente un canal d'admission (6) et un canal d'évacuation (7) pour le fluide,
b) un obturateur (15) disposé dans le carter entre le canal d'admission et le canal d'évacuation,
c) un dispositif d'actionnement électrique qui, en correspondance avec une tension électrique de commande qui lui est appliquée, permet d'amener l'obturateur dans un état fermé ou dans un état ouvert,
**caractérisée** en ce que
d) l'obturateur est un rotor (15) étanché par rapport au carter (1) et situé dans le chemin du fluide entre le canal d'admission (6) et le canal d'évacuation (7), rotor qui peut être mis en rotation sous la pression du fluide et transporte alors du fluide par portions du canal d'admission (6) au canal d'évacuation (7) ;
e) le dispositif d'actionnement électrique est réalisé sous forme de frein (19, 21, 22) qui est accouplé au rotor (15) et agit sur sa faculté de rotation, le frein (19, 21, 22) contenant, comme agent pouvant subir une influence électrique, un liquide électrovisqueux (22) qui se trouve entre deux électrodes (23, 24).

2. Vanne actionnée électriquement selon la revendication 1, **caractérisée** en ce que le frein (19, 21, 22) comprend une roue de freinage (19), qui peut être mise en rotation dans une chambre de freinage (21) remplie du liquide électrovisqueux (22) et qui peut être accouplée au rotor (15).

3. Vanne actionnée électriquement selon la revendication 2, **caractérisée** en ce que la roue de freinage (19) est disposée coaxialement au rotor (15) et est accouplée au rotor (15) par un assemblage à engagement positif (18).

4. Vanne actionnée électriquement selon une des revendications 1 à 3, **caractérisée** en ce que le rotor (15) présente, pour le transport par portions du fluide, une pluralité de poches (16) creusées dans sa face d'enveloppe.

5. Vanne actionnée électriquement selon une des revendications précédentes, **caractérisée** en ce que le rotor (15) est de forme tronconique.

6. Vanne actionnée électriquement selon une des revendications précédentes, **caractérisée** en ce que le rotor (15) est réalisé, au moins dans la région de sa face d'enveloppe, en matériau céramique.

7. Vanne actionnée électriquement selon une des revendications précédentes, **caractérisée** en ce que le rotor (15) est étanché par rapport au carter (1) par une pièce rapportée (10) disposée fixement dans le carter (1), pièce qui est en contact glissant d'étanchement avec la face d'enveloppe du rotor (15).

8. Vanne actionnée électriquement selon la revendication 7, **caractérisée** en ce que la pièce rapportée (10) est réalisée, au moins dans la région voisine du rotor (15), en matériau céramique.

9. Vanne actionnée électriquement selon une des revendications précédentes, **caractérisée** par un dispositif de verrouillage (90, 92) pouvant être actionné à la main, qui permet d'empêcher la rotation du rotor (15) indépendamment du frein électrique (19, 21, 22).

10. Vanne actionnée électriquement selon la revendication 9, **caractérisée** en ce que le dispositif de verrouillage comprend une goupille (90) pouvant être déplacée axialement, qui peut être introduite en engagement positif dans une ouverture correspondante (92) du rotor (15).

11. Vanne actionnée électriquement selon la revendication 10, **caractérisée** en ce que la goupille (90) pouvant être déplacée axialement peut être bloquée dans une position de libération et dans une position de verrouillage.

12. Vanne actionnée électriquement pour un fluide sous pression, notamment vanne pour installations sanitaires, avec
a) un carter (1), qui présente un canal d'admission (6) et un canal d'évacuation (7) pour le fluide,
b) un obturateur (15) disposé dans le carter entre le canal d'admission et le canal d'évacuation,
c) un dispositif d'actionnement électrique qui, en correspondance avec une tension électrique de commande qui lui est appliquée, permet d'amener l'obturateur dans un état fermé ou dans un état ouvert,
**caractérisée** en ce que
d) un rotor (115), qui peut être mis en rotation sous la pression du fluide, est prévu dans le chemin du fluide entre le canal d'admission (106) et le canal d'évacuation (107);
e) un mécanisme de transmission (161, 162) est prévu, qui transforme le mouvement de rotation du rotor (115) en un déplacement de l'obturateur (150) entre la position ouverte et la position fermée ;
f) le dispositif d'actionnement est un embrayage électrovisqueux (170) situé dans le chemin de force entre le rotor (115) et l'obturateur (150), embrayage qui contient, comme agent pouvant subir une influence électrique, un liquide électrovisqueux (122) qui se trouve entre deux électrodes (123, 124).

13. Vanne actionnée électriquement selon la revendication 12, **caractérisée** en ce que l'obturateur (150) est sollicité dans la direction d'ouverture par un moyen de ressort (180).

14. Vanne actionnée électriquement selon la revendication 13, **caractérisée** en ce que l'obturateur (150) est un disque pouvant être mis en rotation, et le moyen de ressort (180) est un ressort spiral.

15. Vanne actionnée électriquement selon une des revendications 12 à 14, **caractérisée** en ce qu'est prévu un mécanisme qui empêche la rotation du rotor (115) dans une direction de rotation.

16. Vanne actionnée électriquement selon une des revendications 13 à 15, **caractérisée** en ce que le mécanisme empêchant la rotation du rotor (115) dans une direction de rotation est le mécanisme de transmission (161, 162) qui, sur la base de son rapport de transmission, empêche que le moyen de ressort (180) fasse tourner le rotor (115) en marche arrière.

17. Vanne actionnée électriquement selon une des revendications 13 à 15, **caractérisée** en ce que le mécanisme empêchant la rotation du rotor (115) dans une direction de rotation est un embrayage de rattrapage.

18. Vanne actionnée électriquement selon une des revendications 12 à 17, **caractérisée** en ce que l'embrayage électrovisqueux (170) est disposé dans le chemin de force entre le mécanisme de transmission (161, 162) et l'obturateur (150).

19. Vanne actionnée électriquement selon une des revendications 12 à 18, **caractérisée** en ce que l'embrayage électrovisqueux (170) comprend une roue d'embrayage (119), qui peut être mise en rotation dans une chambre d'embrayage (121) d'un carter d'embrayage (171) qui est remplie du liquide électrovisqueux (122).

20. Vanne actionnée électriquement selon la revendication 19, **caractérisée** en ce que la chambre d'embrayage (121) présente un profil de section (174) différant de la forme circulaire.

21. Vanne actionnée électriquement selon une des revendications 12 à 20, **caractérisée** en ce qu'un dispositif de verrouillage pouvant être actionné à la main est prévu, qui permet de bloquer le déplacement de l'obturateur (150).
